# FASCICULE DE BREVET EUROPEEN

(11) **EP 1 681 152 B1**
(45) Date de publication et mention de la délivrance du brevet: **13.02.2008**
(21) Numéro de dépôt: 06290013.9
(22) Date de dépôt: 04.01.2006
(51) Int. Cl.: B29C 45/14

(54) **Procédé de fabrication d'un dispositif antivibratoire et dispositif antivibratoire pouvant être obtenu par ce procédé**
Verfahren zur Herstellung einer vibrationshemmenden Vorrichtung und durch das Verfahren hergestellte vibrationshemmende Vorrichtung
Method of manufacturing a vibration stopping device and vibration stopping device manufactured using said method

(30) Priorité: 12.01.2005 FR 0500324
(43) Date de publication de la demande: 19.07.2006
(73) Titulaire: HUTCHINSON, 75008 Paris (FR)
(72) Inventeur: Bellamy, Alain, 41100 Naveil (FR); Petit, Pascal, 45190 Beaugency (FR); Come, Olivier, 45800 Saint Jean De Braye (FR)
(74) Mandataire: Burbaud, Eric

(56) Documents cités:
- WO-A-02/095259
- US-A- 5 636 826
- PATENT ABSTRACTS OF JAPAN vol. 2000, no. 06, 22 septembre 2000 (2000-09-22) -& JP 2000 074128 A (BRIDGESTONE CORP), 7 mars 2000 (2000-03-07)

## Description

La présente invention est relative aux procédés de fabrication de dispositifs antivibratoires et aux dispositifs antivibratoires pouvant être obtenus par ces procédés.

Plus particulièrement, l'invention concerne un procédé de fabrication d'un dispositif antivibratoire destiné à être intercalé entre des premier et deuxième éléments aux fins d'amortissement et de liaison, ledit dispositif antivibratoire comprenant un élément hydraulique comprenant lui-même :
- des première et seconde armatures adaptées pour être fixées (directement ou indirectement) respectivement aux premier et deuxième éléments,
- un corps en élastomère reliant entre elles les première et deuxième armatures,
- et un compartiment hydraulique étanche rempli de liquide, délimité par le corps en élastomère et par une paroi de fermeture fixée à la deuxième armature,
   ce procédé présentant au moins les étapes suivantes :
   (a) assemblage du corps en élastomère avec les première et deuxième armatures,
   (c) fixation de la paroi de fermeture à la deuxième armature.

Les procédés de fabrication connus de ce type comme celui décrit dans WO 02/095259 présentent l'inconvénient d'impliquer des outils de fabrication différents selon les applications du dispositif antivibratoire du fait qu'en général, au moins l'une des deux armatures, par exemple la deuxième, diffère d'une application à l'autre pour pouvoir se fixer à l'élément vibrant correspondant.

La présente invention a notamment pour but de pallier cet inconvénient.

A cet effet, selon l'invention, un procédé du genre en question est caractérisé en ce qu'il comporte en outre une étape (e) de surmoulage, postérieure à l'étape (c), consistant à surmouler au moins une pièce de liaison en matière plastique sur au moins une des première et deuxième armatures.

Grâce à ces dispositions, il est possible d'utiliser des machines standardisées pour assembler des éléments hydrauliques qui sont surmoulés ultérieurement par la pièce de liaison en matière plastique ayant une forme spécifique à la fixation souhaitée, en fonction de l'application. Ainsi, on améliore la standardisation du procédé de fabrication, pour toutes les applications utilisant le même élément hydraulique.

De plus, on diminue l'encombrement de l'élément hydraulique (et notamment l'encombrement d'au moins une des armatures) pendant l'essentiel de son processus de fabrication, ce qui facilite la mise en oeuvre industrielle de ces étapes et facilite également le transport et le stockage des éléments hydrauliques avant la mise en oeuvre de l'étape de surmoulage (e).

Dans divers modes de réalisation du procédé selon l'invention, on peut éventuellement avoir recours en outre à l'une et/ou à l'autre des dispositions suivantes :
- le procédé comprend en outre une étape (b) de remplissage en liquide du compartiment hydraulique, l'étape (b) étant réalisée entre les étapes (a) et (c), et la paroi de fermeture fermant le compartiment hydraulique de façon étanche lors de l'étape (c) ;
- le procédé comprend en outre des étapes (b) de remplissage en liquide du compartiment hydraulique au travers d'un conduit de remplissage, et (d) de fermeture étanche du compartiment hydraulique par obturation du conduit de remplissage, les étapes (b) et (d) étant réalisées après l'étape (c) ;
- les étapes (b) et (d) sont réalisées après l'étape (e) ;
- les étapes (b) et (d) sont réalisées avant l'étape (e) ;
   - la deuxième armature comporte une zone de fermeture solidarisant ladite deuxième armature à la paroi de fermeture, et au cours de l'étape (e) de surmoulage, on surmoule la pièce de liaison en matière plastique au moins partiellement sur ladite zone de fermeture ;
   - la pièce de liaison en matière plastique est solidaire d'organes de fixation adaptés pour être fixés au deuxième élément, lesquels organes de fixation sont surmoulés par la pièce de liaison en matière plastique au cours de l'étape (e) de surmoulage ;
   - au cours de l'étape (a) on enrobe les premières et deuxièmes armatures sous une couche d'élastomère ;
   - la pièce de liaison en matière plastique est solidaire d'un organe de limitation de débattement adapté pour limiter des débattements relatifs entre les première et deuxième armatures ;
   - l'organe de limitation est moulé en matière plastique au cours de l'étape (e) de surmoulage, d'une seule pièce avec la pièce de liaison ;
   - le corps en élastomère est précontraint en compression lors de l'étape (e) de surmoulage et l'organe de limitation maintient une précontrainte de compression sur le corps en élastomère après l'étape (e) ;
   - le corps en élastomère présente sensiblement une forme de cloche s'étendant selon un axe central entre un sommet solidaire de la première armature et une base annulaire solidaire de la deuxième armature, la pièce de liaison en matière plastique est surmoulée sur la deuxième armature et s'étend sensiblement perpendiculairement audit axe central, et l'organe de limitation forme un arc comprenant :
      deux extrémités solidaires de la pièce de liaison en matière plastique de part et d'autre du corps en élastomère,
      et un sommet recouvrant le sommet du corps en élastomère et la première armature ;
   - le compartiment hydraulique comprend une chambre de travail remplie de liquide et une chambre de compensation remplie de liquide séparée de la chambre de travail par une cloison, et délimitée au moins partiellement par ladite paroi de fermeture, cette paroi de fermeture étant souple ;
   - au cours de l'étape (c) on sertit au moins une zone de fermeture appartenant à la deuxième armature sur la paroi souple et la cloison, et au cours de l'étape (e) de surmoulage, la pièce de liaison en matière plastique est surmoulée sur la deuxième armature en couvrant au moins partiellement ladite zone de fermeture sertie.

Par ailleurs, l'invention concerne également un dispositif antivibratoire susceptible d'être obtenu par un procédé tel que défini ci-dessus, destiné à être intercalé entre des premier et deuxième éléments aux fins d'amortissement et de liaison, ce dispositif antivibratoire comprenant un élément hydraulique comprenant lui-même :
- des première et seconde armatures adaptées pour être fixées respectivement aux premier et deuxième éléments,
- un corps en élastomère reliant entre elles les première et deuxième armatures,
- et un compartiment hydraulique étanche rempli de liquide, délimité par le corps en élastomère et par une paroi de fermeture, ladite paroi de fermeture étant solidarisée à la deuxième armature par au moins une zone de fermeture, caractérisé en ce qu'il comporte en outre une pièce de liaison en matière plastique surmoulée sur la deuxième armature et recouvrant au moins partiellement la zone de fermeture.

Grâce à ces dispositions, l'étanchéité de tels dispositifs peut éventuellement être renforcée puisque le maintien en place de la zone de fermeture est renforcé par le surmoulage de la pièce de liaison en matière plastique.

Dans divers modes de réalisation du dispositif selon l'invention, on peut éventuellement avoir recours en outre à l'une et/ou à l'autre des dispositions suivantes :
- la pièce de liaison en matière plastique est solidaire d'organes de fixation adaptés pour être fixés au deuxième élément, lesdits organes de fixation étant surmoulés par la pièce de liaison en matière plastique ;
- le corps en élastomère comprend une fine couche d'élastomère enrobant au moins partiellement la deuxième armature et interposée entre la deuxième armature et la pièce de liaison ;
- l'élément hydraulique présente une gorge périphérique dans laquelle pénètre la pièce de liaison ;
- la pièce de liaison en matière plastique est solidaire d'un organe de limitation de débattement adapté pour limiter des débattements relatifs entre les première et deuxième armatures ;
- l'organe de limitation est moulé en matière plastique, d'une seule pièce avec la pièce de liaison ;
- l'organe de limitation maintient une précontrainte de compression sur le corps en élastomère ;
- le corps en élastomère présente sensiblement une forme de cloche s'étendant selon un axe central entre un sommet solidaire de la première armature et une base annulaire solidaire de la deuxième armature, la pièce de liaison en matière plastique est surmoulée sur la deuxième armature et s'étend sensiblement perpendiculairement audit axe central, et l'organe de limitation forme un arc comprenant :
   deux extrémités solidaires de la pièce de liaison en matière plastique de part et d'autre du corps en élastomère,
   et un sommet recouvrant le sommet du corps en élastomère et la première armature ;
- le compartiment hydraulique comprend :
   - d'une part, une chambre de travail délimitée par le corps en élastomère,
   - et d'autre part, une chambre de compensation remplie de liquide séparée de la chambre de travail par une cloison, et délimitée au moins partiellement par la paroi de fermeture, ladite paroi de fermeture étant souple ;
      - la zone de fermeture appartient à la deuxième armature et ladite zone de fermeture est sertie sur la paroi souple et la cloison.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue d'ensemble d'un dispositif conforme à l'invention ;
- la figure 2 est un élément hydraulique assemblé avant surmoulage de la pièce conformément à l'invention ;
- la figure 3 est une coupe verticale du dispositif de la figure 1 ;
- la figure 4 est une coupe verticale d'un dispositif conforme à un deuxième mode de réalisation de l'invention.

Sur les différentes figures, les mêmes références désignent des éléments identiques ou similaires.

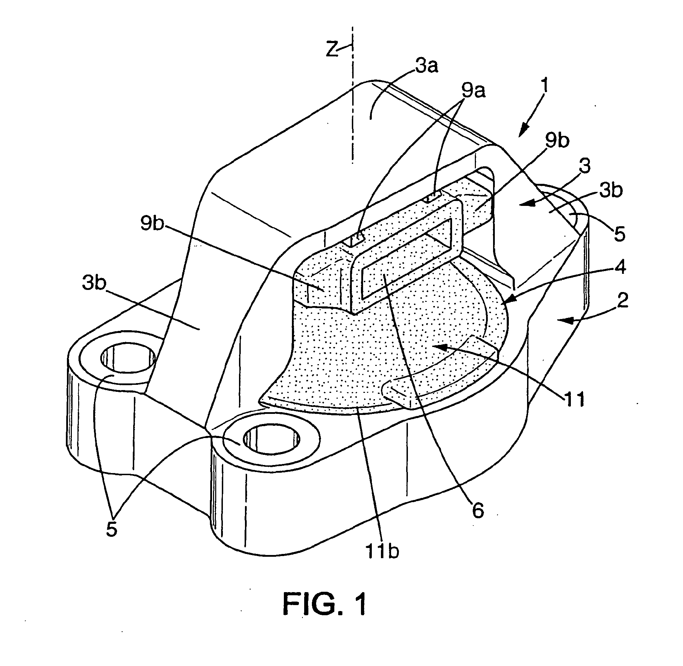

Sur la figure 1, un dispositif antivibratoire 1 conforme à l'invention est représenté. Ce dispositif antivibratoire 1 comprend une pièce de liaison en plastique 2, par exemple du polyamide 6-6, éventuellement chargé en fibres de verre ou autres, et un élément hydraulique 4. L'élément hydraulique 4, décrit plus en détail par la suite, comporte un dispositif de fixation, comme par exemple une cavité de fixation 6 apte à recevoir par emboîtement un organe de liaison solidaire d'un élément vibrant tel un moteur de véhicule.

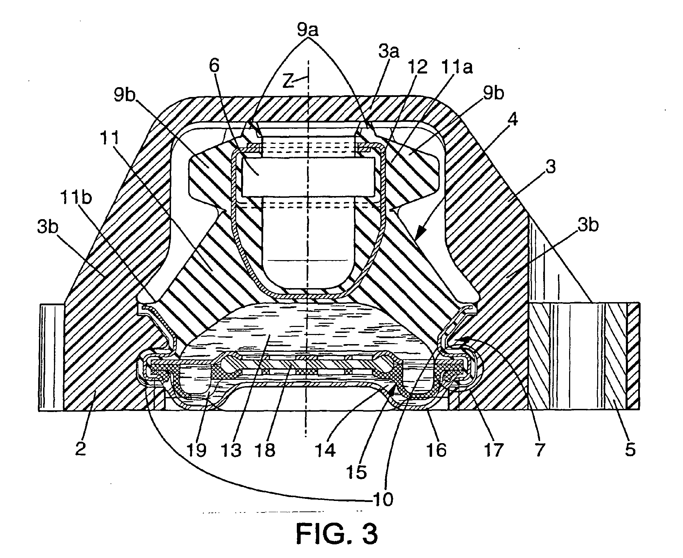

Sur la figure 3 est représentée une coupe du dispositif antivibratoire 1 de la figure 1. L'élément hydraulique 4 peut comporter un corps en élastomère 11 en forme générale tronconique, par exemple en caoutchouc. Ce corps en élastomère 11 s'étend en convergeant selon un axe central Z, entre :
- une base annulaire 11b enrobant une armature rigide annulaire 10,
- et un sommet 11a entourant une armature supérieure 12, permettant ainsi de rigidifier la cavité de fixation 6.

Sous le corps en élastomère 11, un compartiment hydraulique est formé. Ce compartiment hydraulique, pouvant comprendre une chambre de travail 13 et une chambre de compensation 14, est rempli de liquide, par exemple du glycol ou similaires, et peut se déformer sous l'action de vibrations transmises par le corps en élastomère 11. La chambre de compensation 14 remplie de liquide communique avec la chambre de travail 13 par exemple par l'intermédiaire d'une cloison de séparation 15. Cette cloison de séparation 15 peut comporter classiquement un clapet de découplage 18 et un passage étranglé 19, par lesquels la chambre de travail 13 communique avec la chambre de compensation 14. Cette chambre de compensation 14 est fermée par une paroi souple 16, par exemple un soufflet de compensation, qui peut se déformer sous l'influence de l'entrée de liquide de la chambre de travail 13 vers la chambre de compensation 14. L'armature rigide 10 est par exemple sertie sur la cloison de séparation 15 et la paroi souple 16 par repliement d'au moins une portion de l'armature 10, formant une zone de fermeture sertie 17 (couronne annulaire ou pattes). La pièce de liaison 2 peut recouvrir au moins partiellement cette zone de fermeture 17, de manière à renforcer cette fermeture.

La pièce de liaison 2 peut surmouler l'une quelconque des armatures, par exemple l'armature 10. Cette armature 10 peut présenter une gorge périphérique qui définit une gorge périphérique 7 externe sur l'élément hydraulique 4. La matière plastique de la pièce de liaison 2 pénètre dans cette gorge 7, en renforçant la fixation de ladite pièce de liaison 2 sur l'élément hydraulique 4. La pièce de liaison 2 peut comporter des organes de fixation 5, par exemple des douilles en métal, pouvant être traversées par des vis ou similaires, pour fixer la pièce de liaison 2 sur un élément tel un châssis de véhicule. Ces organes de fixation 5 sont également surmoulés par la pièce de liaison 2.

Une fine couche d'élastomère du corps en élastomère 11 peut recouvrir l'armature annulaire 10 et est ainsi interposée entre ladite armature annulaire 10 et la pièce de liaison 2, ce qui renforce l'isolation vibratoire procuré par le dispositif antivibratoire. De plus, cette fine couche d'élastomère assure une filtration thermique, lors du surmoulage de la pièce de liaison 2 plastique sur l'élément hydraulique 4 qui permet d'éviter une détérioration du collage de l'armature 10 sur le corps en élastomère 11.

Un organe de limitation 3 de débattement, présentant par exemple une forme d'arc avec un sommet 3a et deux extrémités 3b solidaires de la pièce de liaison 2, peut permettre de limiter le débattement relatif entre les armatures 10, 12 de l'élément hydraulique 4. Pour cela, l'élément hydraulique 4 comporte :
- des plots 9a orientés vers le haut, qui peuvent venir buter contre la zone inférieure du sommet 3a de l'organe de limitation lors d'un débattement selon l'axe Z,
- et des bossages 9b latéraux, qui peuvent venir buter contre les branches latérales 3b de l'organe de limitation 3.

Conformément à la figure 3, l'organe de limitation 3 et la pièce de liaison 2 peuvent être constitués d'une seule pièce surmoulée autour de l'élément hydraulique 4.

De plus, l'élément hydraulique 4 peut éventuellement être maintenu en précontrainte de compression par l'organe de limitation 3 avant montage dans un véhicule. Dans ce cas, le sommet 3a fait pression sur l'élément hydraulique 4 par l'intermédiaire des plots 9a.

Cette précontrainte est en fait une conséquence de la présence de l'organe de limitation de débattement 3. De manière à empêcher une amplitude de débattement trop élevée, le sommet 3a de l'organe de limitation de débattement est placé sous le niveau de la position d'équilibre à vide du dispositif antivibratoire, exerçant ainsi une contrainte sur le dispositif antivibratoire puisque celui-ci est écarté de sa position d'équilibre. Sous l'effet du poids de la charge à supporter, le point d'équilibre est abaissé en dessous du sommet 3a.

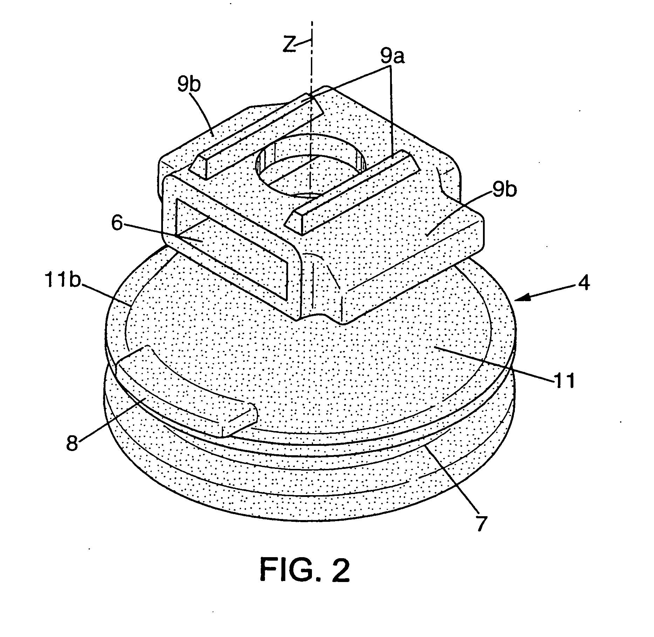

Lors de la fabrication du dispositif antivibratoire 1, le corps en élastomère 11 est tout d'abord formé autour des deux armatures 10 et 12, par exemple par moulage. Puis, la cloison 15, assemblée séparément, peut être placée dans le corps en élastomère 11, au niveau de sa base 11b. Ensuite, le compartiment hydraulique est rempli de liquide, comme du glycol, de telle sorte que les chambres de travail 13 et de compensation 14 sont remplies. Enfin, on peut obtenir un élément hydraulique 4 complet, représenté à la figure 2, en sertissant la zone de fermeture 17 de l'armature rigide 10 sur la paroi souple 16, fermant ainsi le compartiment hydraulique.

Ensuite on surmoule cet élément hydraulique 4 assemblé par la pièce de liaison 2 et le cas échéant par l'organe de limitation 3, lors de la dernière étape du procédé conforme à l'invention. L'élément hydraulique 4 est placé dans un moule, avec éventuellement les moyens de fixation 5 de la pièce de liaison 2. On peut éventuellement comprimer l'élément hydraulique 4 lors de cette étape si l'on souhaite obtenir un effet de précontrainte de compression, comme on l'a vu précédemment. La matière plastique est alors coulée dans le moule, puis après durcissement de la matière, l'ensemble est sorti du moule.

En raison de la forme de la pièce de liaison 2 et de l'organe de limitation 3, l'absence de ceux-ci simplifie les étapes de remplissage et d'assemblage de l'ensemble. De plus, l'espace occupé par l'élément hydraulique 4 avant l'étape de remplissage est réduit facilitant le transport et le stockage des éléments hydrauliques 4 assemblés et remplis, et prêts à subir le surmoulage de la pièce de liaison. De plus, cette pièce de liaison accroît l'étanchéité de la zone de fermeture 17.

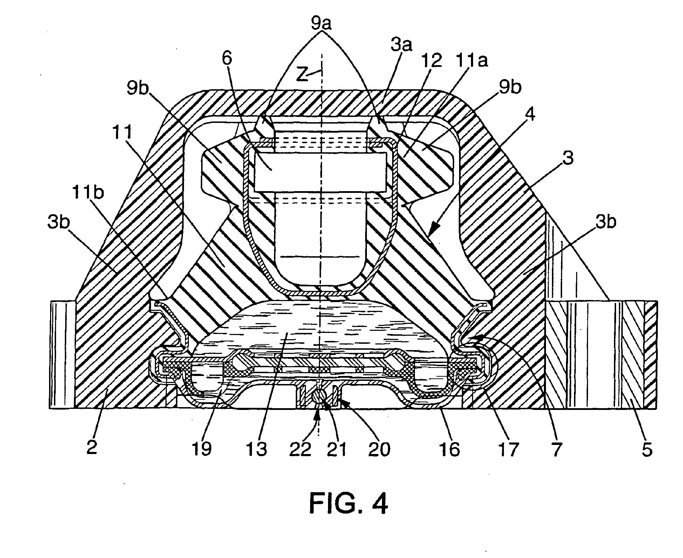

Un autre mode de réalisation est représenté à la figure 4. Ce dispositif est équivalent à celui de la figure 3 à l'exception du fait qu'il comporte un orifice de remplissage 22. Cet orifice de remplissage 22 peut être éventuellement pratiqué dans la paroi souple 16, fermé par une bille 21 de diamètre supérieur à l'orifice de remplissage 22. Une armature annulaire 20, par exemple enrobée dans la paroi souple 16, peut permettre de maintenir la paroi souple 16 contre la bille 21, formant ainsi une étanchéité résistante aux variations de pression.

Lors de la fabrication de ce dispositif antivibratoire 1, le corps en élastomère 11 est tout d'abord formé autour des deux armatures 10 et 12, par exemple par moulage. Puis, la cloison 15, assemblée séparément, peut être placée dans le corps en élastomère 11, au niveau de sa base 11b. Ensuite, la zone de fermeture 17 de l'armature rigide 10 est sertie sur la paroi souple 16.

Ensuite, selon une première variante de ce procédé de fabrication, on surmoule cet élément hydraulique 4 assemblé mais non rempli par la pièce de liaison 2 et le cas échéant par l'organe de limitation 3. L'élément hydraulique 4 est placé dans un moule, avec éventuellement les moyens de fixation 5 de la pièce de liaison 2. On peut éventuellement comprimer l'élément hydraulique 4 lors de cette étape si l'on souhaite obtenir un effet de précontrainte de compression, comme on l'a vu précédemment. La matière plastique est alors coulée dans le moule, puis après durcissement de la matière, l'ensemble est sorti du moule.

Ensuite, le compartiment hydraulique peut être rempli de liquide, comme du glycol, via l'orifice de remplissage 22 au moyen d'une buse par exemple. Pour cela, cette buse peut faire le vide dans le compartiment hydraulique et puis injecter le liquide de telle sorte que les chambres de travail 13 et de compensation 14 sont remplies. Enfin, la buse place éventuellement une bille 21 dans l'orifice 22, fermant de manière étanche le compartiment hydraulique.

Selon une deuxième variante de fabrication de ce dispositif, après avoir assemblé la cloison 15 et la paroi souple 16, le compartiment hydraulique peut être rempli de liquide, comme précédemment, par exemple au moyen d'une buse. Puis, la buse place éventuellement une bille 21 dans l'orifice 22, fermant de manière étanche le compartiment hydraulique. Alors seulement, on surmoule cet élément hydraulique 4 assemblé et rempli par la pièce de liaison 2 et le cas échéant par l'organe de limitation 3, selon une méthode de surmoulage sensiblement identique.

## Revendications

1. Procédé de fabrication d'un dispositif antivibratoire (1) destiné à être intercalé entre des premier et deuxième éléments aux fins d'amortissement et de liaison, ledit dispositif antivibratoire (1) comprenant un élément hydraulique (4) comprenant lui-même :
- des première et deuxième armatures (12, 10) adaptées pour être fixées respectivement aux premier et deuxième éléments,
- un corps en élastomère (11) reliant entre elles les première et deuxième armatures (12, 10),
- et un compartiment hydraulique étanche rempli de liquide, délimité par le corps en élastomère (11) et par une paroi de fermeture (16) fixée à la deuxième armature (10),
ce procédé présentant au moins les étapes suivantes :
(a) assemblage du corps en élastomère (11) avec les première et deuxième armatures (12, 10),
(c) fixation de la paroi de fermeture (16) à la deuxième armature (10),
ce procédé étant **caractérisé en ce qu**'il comporte en outre une étape (e) de surmoulage, postérieure à l'étape (c), consistant à surmouler au moins une pièce de liaison (2) en matière plastique sur au moins une des première et deuxième armatures (10, 12).

2. Procédé selon la revendication 1, comprenant en outre l'étape suivante :
(b) remplissage en liquide du compartiment hydraulique,
dans lequel l'étape (b) est réalisée entre les étapes (a) et (c), et la paroi de fermeture (16) fermant le compartiment hydraulique de façon étanche lors de l'étape (c).

3. Procédé selon la revendication 1, comprenant en outre les étapes suivantes:
(b) remplissage en liquide du compartiment hydraulique au travers d'un conduit de remplissage (22),
(d) fermeture étanche du compartiment hydraulique par obturation du conduit de remplissage (22) ;
dans lequel les étapes (b) et (d) sont réalisées après l'étape (c).

4. Procédé selon la revendication 3, dans lequel les étapes (b) et (d) sont réalisées après l'étape (e).

5. Procédé selon la revendication 3, dans lequel les étapes (b) et (d) sont réalisées avant l'étape (e).

6. Procédé selon l'une quelconque des revendications précédentes, dans lequel la deuxième armature comporte une zone de fermeture (17) solidarisant ladite deuxième armature à la paroi de fermeture (16), et au cours de l'étape (e) de surmoulage, on surmoule la pièce de liaison (2) en matière plastique au moins partiellement sur ladite zone de fermeture (17).

7. Procédé selon l'une quelconque des revendications précédentes, dans lequel la pièce de liaison (2) en matière plastique est solidaire d'organes de fixation (5) adaptés pour être fixés au deuxième élément, lesquels organes de fixation (5) sont surmoulés par la pièce de liaison (2) en matière plastique au cours de l'étape (e) de surmoulage.

8. Procédé selon l'une quelconque des revendications précédentes, dans lequel, au cours de l'étape (a) on enrobe les première et deuxième armatures (10, 12) sous une couche d'élastomère.

9. Procédé selon l'une quelconque des revendications précédentes, dans lequel la pièce de liaison (2) en matière plastique est solidaire d'un organe de limitation (3) de débattement adapté pour limiter des débattements relatifs entre les première et deuxième armatures (12, 10).

10. Procédé selon la revendication 9, dans lequel l'organe de limitation (3) est moulé en matière plastique au cours de l'étape (e) de surmoulage, d'une seule pièce avec la pièce de liaison (2).

11. Procédé selon l'une quelconque des revendications 9 et 10, dans lequel le corps en élastomère (11) est précontraint en compression lors de l'étape (e) de surmoulage et l'organe de limitation (3) maintient une précontrainte de compression sur le corps en élastomère (11) après l'étape (e).

12. Procédé selon l'une quelconque des revendications 9 à 11, dans lequel le corps en élastomère (11) présente sensiblement une forme de cloche s'étendant selon un axe central entre un sommet (11a) solidaire de la première armature (12) et une base annulaire (11b) solidaire de la deuxième armature (10), la pièce de liaison (2) en matière plastique est surmoulée sur la deuxième armature (10) et s'étend sensiblement perpendiculairement audit axe central, et l'organe de limitation (3) forme un arc comprenant :
deux extrémités (3b) solidaires de la pièce de liaison en matière plastique (2) de part et d'autre du corps en élastomère (11),
et un sommet (3a) recouvrant le sommet (11a) du corps en élastomère et la première armature (12).

13. Procédé selon l'une quelconque des revendications précédentes, dans lequel le compartiment hydraulique comprend une chambre de travail (13) remplie de liquide et une chambre de compensation (14) remplie de liquide séparée de la chambre de travail (13) par une cloison (15), et délimitée au moins partiellement par ladite paroi de fermeture (16), cette paroi de fermeture étant souple.

14. Procédé selon la revendication 13, dans lequel, au cours de l'étape (c) on sertit au moins une zone de fermeture (17) appartenant à la deuxième armature (10) sur la paroi souple (16) et la cloison (15), et au cours de l'étape de surmoulage (e), la pièce de liaison (2) en matière plastique est surmoulée sur la deuxième armature (10) en couvrant au moins partiellement ladite zone de fermeture (17) sertie.

15. Dispositif antivibratoire (1) susceptible d'être réalisé par un procédé selon l'une quelconque des revendications précédentes, destiné à être intercalé entre des premier et deuxième éléments aux fins d'amortissement et de liaison, ce dispositif antivibratoire (1) comprenant un élément hydraulique (4) comprenant lui-même :
- des première et seconde armatures (12, 10) adaptées pour être fixées respectivement aux premier et deuxième éléments,
- un corps en élastomère (11) reliant entre elles les première et deuxième armatures (12, 10),
- et un compartiment hydraulique étanche rempli de liquide, délimité par le corps en élastomère (11) et par une paroi de fermeture (16), ladite paroi de fermeture étant solidarisée à la deuxième armature par au moins une zone de fermeture (17), **caractérisé en ce qu'**il comporte en outre une pièce de liaison (2) en matière plastique surmoulée sur la deuxième armature (10,12) et recouvrant au moins partiellement la zone de fermeture (17).

16. Dispositif antivibratoire (1) selon la revendication 15, dans lequel la pièce de liaison (2) en matière plastique est solidaire d'organes de fixation (5) adaptés pour être fixés au deuxième élément, lesdits organes de fixation (5) étant surmoulés par la pièce de liaison (2) en matière plastique.

17. Dispositif selon l'une quelconque des revendications 15 et 16, dans lequel le corps en élastomère (11) comprend une fine couche d'élastomère enrobant au moins partiellement la deuxième armature (10) et interposée entre la deuxième armature (10) et la pièce de liaison (2).

18. Dispositif selon l'une quelconque des revendications 15 à 17, dans lequel l'élément hydraulique présente une gorge périphérique (7) dans laquelle pénètre la pièce de liaison (2).

19. Dispositif antivibratoire selon l'une quelconque des revendications 15 à 18, dans lequel la pièce de liaison (2) en matière plastique est solidaire d'un organe de limitation (3) de débattement adapté pour limiter des débattements relatifs entre les première et deuxième armatures (12, 10).

20. Dispositif antivibratoire selon la revendication 19, dans lequel l'organe de limitation (3) est moulé en matière plastique, d'une seule pièce avec la pièce de liaison (2).

21. Dispositif antivibratoire selon la revendication 19 ou la revendication 20, dans lequel l'organe de limitation (3) maintient une précontrainte de compression sur le corps en élastomère (11).

22. Dispositif antivibratoire selon l'une quelconque des revendications 19 à 21, dans lequel le corps en élastomère (11) présente sensiblement une forme de cloche s'étendant selon un axe central (Z) entre un sommet (11a) solidaire de la première armature (12) et une base annulaire (11b) solidaire de la deuxième armature (10), la pièce de liaison en matière plastique est surmoulée sur la deuxième armature (10) et s'étend sensiblement perpendiculairement audit axe central, et l'organe de limitation (3) forme un arc comprenant :
deux extrémités (3b) solidaires de la pièce de liaison en matière plastique de part et d'autre du corps en élastomère (11),
et un sommet (3a) recouvrant le sommet (11a) du corps en élastomère et la première armature (12).

23. Dispositif antivibratoire selon l'une quelconque des revendications 15 à 22, dans lequel le compartiment hydraulique comprend :
- d'une part, une chambre de travail (13) délimitée par le corps en élastomère (11),
- et d'autre part, une chambre de compensation (14) remplie de liquide séparée de la chambre de travail (13) par une cloison (15), et délimitée au moins partiellement par la paroi de fermeture (16), ladite paroi de fermeture étant souple.

24. Dispositif selon la revendication 23, dans lequel la zone de fermeture (17) appartient à la deuxième armature (10) et ladite zone de fermeture est sertie sur la paroi souple (16) et la cloison (15).

## Claims

1. A method of manufacturing an antivibration device (1) for being interposed between first and second elements for damping and linking purposes, said antivibration device (1) comprising a hydraulic element (4), itself comprising:
- first and second strength members (12, 10) adapted to be fastened respectively to the first and second elements;
- an elastomer body (11) interconnecting the first and second strength members (12, 10); and
- a leaktight hydraulic compartment filled with liquid, defined by the elastomer body (11) and by a closure wall (16) fastened to the second strength member (10),
the method presenting at least the following steps:
a) assembling the elastomer body (11) with the first and second strength members (12, 10); and
c) fastening the closure wall (16) to the second strength member (10),
the method being **characterized in that** it further comprises an overmolding step e) subsequent to the step c) and consisting in overmolding at least one connection piece (2) of plastics material on at least one of the first and second strength members (10, 12).

2. A method according to claim 1, further comprising the following step:
b) filling the hydraulic compartment with liquid;
in which the step b) is performed between the steps a) and c), with the closure wall (16) closing the hydraulic compartment in leaktight manner during step c).

3. A method according to claim 1, further comprising the following steps:
b) filling the hydraulic compartment with liquid through a filler duct (22); and
d) closing the hydraulic compartment in leaktight manner by closing the filler duct (22);
in which method the steps b) and d) are performed after the step c).

4. A method according to claim 3, in which the steps b) and d) are performed after the step e).

5. A method according to claim 3, in which the steps b) and d) are performed before the step e).

6. A method according to any preceding claim, in which the second strength member includes a closure zone (17) for securing said second strength member to the closure wall (16), and during overmolding step e) the plastics material connection piece (2) is overmolded at least in part over said closure zone (17).

7. A method according to any preceding claim, in which the plastics material connection piece (2) is secured to fastener members (5) adapted to be fastened to the second element, which fastener members (5) have the plastics material connection piece (2) overmolded thereon during the overmolding step e).

8. A method according to any preceding claim, in which, during step a), the first and second strength members (12, 10) are coated in an elastomer layer.

9. A method according to any preceding claim, in which the plastics material connection piece (2) is secured to a stroke limiter member (3) adapted to limit relative movement between the first and second strength members (12, 10).

10. A method according to claim 9, in which the limiter member (3) is molded out of plastics material during the overmolding step e) integrally with the connection piece (2).

11. A method according to claim 9 or claim 10, in which the elastomer body (11) is prestressed in compression during overmolding step e) and the limiter member (3) maintains compression prestress on the elastomer body (11) after step e).

12. A method according to any one of claims 9 to 11, in which the elastomer body (11) is substantially bell-shaped, extending along a central axis between a top (11a) secured to the first strength member (12) and an annular base (11b) secured to the second strength member (10), the plastics material connection piece (2) is overmolded on the second strength member (10) and extends substantially perpendicularly to said central axis, and the limiter member (3) of arcuate shape comprises:
two ends (3b) secured to the plastics material connection piece (2) on either side of the elastomer body (11); and
a top (3a) covering the top (11a) of the elastomer body and the first strength member (12).

13. A method according to any preceding claim, in which the hydraulic compartment includes a working chamber (13) filled with liquid and a compensation chamber (14) filled with liquid and separated from the working chamber (13) by a partition (15), and defined at least in part by said closure wall (16), said closure wall being flexible.

14. A method according to claim 13, in which, during step c), at least a closure zone (17) belonging to the second strength member (10) is crimped onto the flexible wall (16) and the partition (15), and during the overmolding step e), the plastics material connection piece (2) is overmolded on the second strength member (10) so as to cover said crimped closure zone (17), at least in part.

15. An antivibration device (1) suitable for being made by a method according to any preceding claim, the device being for being interposed between first and second elements for damping and linking purposes, said antivibration device (1) comprising a hydraulic element (4) itself comprising:
- first and second strength members (12, 10) adapted to be fastened respectively to the first and second elements;
- an elastomer body (11) interconnecting the first and second strength members (12, 10); and
- a leaktight hydraulic compartment filled with liquid, defined by the elastomer body (11) and by a closure wall (16), said closure wall being secured to the second strength member by at least one closure zone (17),
the device being **characterized in that** it further comprises a connection piece (2) of plastics material overmolded onto the second strength member (10) and covering the closure zone (17) at least in part.

16. An antivibration device (1) according to claim 15, in which the plastics material connection piece (2) is secured to fastener members (5) suitable for being fastened to the second element, said fastener members (5) being overmolded by the plastics material connection piece (2).

17. A device according to claim 15 or claim 16, in which the elastomer body (11) includes a fine layer of elastomer coating the second strength member (10) at least in part and interposed between the second strength member (10) and the connection piece (2).

18. A device according to any one of claims 15 to 17, in which the hydraulic element presents a peripheral groove (7) into which the connection piece (2) penetrates.

19. An antivibration device according to any one of claims 15 to 18, in which the plastics material connection piece (2) is secured to a stroke limiter member (3) adapted to limit relative movement between the first and second strength members (12, 10).

20. An antivibration device according to claim 19, in which the limiter member (3) is integrally molded out of plastics material together with the connection piece (2).

21. An antivibration device according to claim 19 or claim 20, in with the limiter member (3) maintains compression prestress on the elastomer body (11).

22. An antivibration device according to any one of claims 19 to 21, in which the elastomer body (11) is substantially bell-shaped, extending along a central axis (Z) between a top (11a) secured to the first strength member (12) and an annular base (11b) secured to the second strength member (10), the plastics material connection piece is overmolded on the second strength member (10) and extends substantially perpendicularly to said central axis, and the limiter member (3) of arcuate shape comprising:
two ends (3b) secured to the plastics material connection piece on either side of the elastomer body (11); and
a top (3a) covering the top (11a) of the elastomer body and the first strength member (12).

23. An antivibration device according to any one of claims 15 to 22, in which the hydraulic compartment comprises:
- firstly a working chamber (13) defined by the elastomer body (11); and
- secondly a compensation chamber (14) filled with liquid, separated from the working chamber (13) by a partition (15), and defined at least in part by the closure wall (16), said closure wall being flexible.

24. A device according to claim 23, in which the closure zone (17) belongs to the second strength member (10), and said closure zone is crimped to the flexible wall (16) and the partition (15).

## Patentansprüche

1. Verfahren zum Herstellen einer vibrationshemmenden Vorrichtung (1), die dazu bestimmt ist, zum Zwecke des Dämpfens und Verbindens zwischen ersten und zweiten Elementen angeordnet zu werden, wobei die vibrationshemmende Vorrichtung (1) ein hydraulisches Element (4) einschließt, welches seinerseits einschließt:
- erste und zweite Armierungen (12, 10), die dazu ausgelegt sind, um an ersten bzw. zweiten Elementen befestigt zu werden,
- einen Elastomer-Körper (11), der die ersten und zweiten Armierungen (12, 10) miteinander verbindet,
- und einen mit Flüssigkeit gefüllten, dichten hydraulischen Raum, der vom Elastomer-Körper (11) und einer an der zweiten Armierung (10) befestigten Schließwand (16) begrenzt ist,
wobei das Verfahren zumindest die folgenden Schritte aufweist:
(a) Verbinden des Elastomer-Körpers (11) mit den ersten und zweiten Armierungen (12, 10),
(c) Befestigen der Schließwand (16) an der zweiten Armierung (10),
wobei dieses Verfahren **dadurch gekennzeichnet ist, dass** es nach dem Schritt (c) ferner einen Schritt (e) des Umgießens umfasst, der darin besteht, dass zumindest ein Verbindungsstück (2) aus Kunststoff auf der ersten und/oder zweiten Armierung (12, 10) umgossen wird.

2. Verfahren gemäß Anspruch 1, welches ferner den folgenden Schritt einschließt:
(b) Füllen des hydraulischen Raums mit Flüssigkeit,
wobei der Schritt (b) zwischen den Schritten (a) und (c) ausgeführt wird und die Schließwand (16) den hydraulischen Raum während des Schritts (c) dicht verschließt.

3. Verfahren gemäß Anspruch 1, welches ferner die folgenden Schritte einschließt:
(b) Füllen des hydraulischen Raums mit Flüssigkeit durch eine Füllleitung (22),
(d) dichtes Verschließen des hydraulischen Raums durch Versperren der Füllleitung (22);
wobei die Schritte (b) und (d) nach dem Schritt (c) ausgeführt werden.

4. Verfahren gemäß Anspruch 3, in welchem die Schritte (b) und (d) nach dem Schritt (e) ausgeführt werden.

5. Verfahren gemäß Anspruch 3, in welchem die Schritte (b) und (d) vor dem Schritt (e) ausgeführt werden.

6. Verfahren gemäß einem der vorstehenden Ansprüche, in welchem die zweite Armierung einen Schließbereich (17) umfasst, der die zweite Armierung mit der Schließwand (16) verbindet, und in welchem im Verlauf des Schritts (e) des Umgießens das Verbindungsstück (2) aus Kunststoff zumindest teilweise auf dem Schließbereich (17) umgossen wird.

7. Verfahren gemäß einem der vorstehenden Ansprüche, in welchem das Verbindungsstück (2) aus Kunststoff mit Befestigungsorganen (5) verbunden wird, die dazu ausgelegt sind, am zweiten Element befestigt zu werden, wobei die Befestigungsorgane (5) im Verlauf des Schritts (e) des Umgießens vom Verbindungsstück (2) aus Kunststoff umgossen werden.

8. Verfahren gemäß einem der vorstehenden Ansprüche, in welchem die ersten und zweiten Armierungen (12, 10) im Verlauf des Schritts (a) mit einer Elastomer-Schicht ummantelt werden.

9. Verfahren gemäß einem der vorstehenden Ansprüche, in welchem das Verbindungsstück (2) aus Kunststoff mit einem federnden Begrenzungsorgan (3) verbunden wird, welches dazu ausgelegt ist, die relativen Federungswege zwischen den ersten und zweiten Armierungen (12, 10) zu begrenzen.

10. Verfahren gemäß einem der Ansprüche 9, in welchem das Begrenzungsorgan (3) im Verlauf des Schritts (e) des Umgießens mit dem Verbindungsstück (2) einstückig aus Kunststoff gegossen wird.

11. Verfahren gemäß einem der Ansprüche 9 und 10, in welchem der Elastomer-Körper (11) während des Schritts (e) des Umgießens unter Druck vorgespannt wird und das Begrenzungsorgan (3) nach dem Schritt (e) eine Druckvorspannung auf den Elastomer-Körper (11) aufrechterhält.

12. Verfahren gemäß einem der Ansprüche 9 bis 11, in welchem der Elastomer-Körper (11) im Wesentlichen glockenförmig ist und sich entlang einer Mittelachse zwischen einer mit der ersten Armierung (12) verbundenen Spitze (11 a) und einer mit der zweiten Armierung (10) verbundenen, ringförmigen Basis (11 b) erstreckt, wobei das Verbindungsstück (2) aus Kunststoff auf der zweiten Armierung (10) umgossen wird und sich im Wesentlichen orthogonal zur Mittelachse erstreckt und das Begrenzungsorgan (3) einen Bogen bildet, umfassend:
zwei Enden (3b), die auf beiden Seiten des Elastomer-Körpers (11) mit dem Verbindungsstück (2) aus Kunststoff verbunden sind,
und eine Spitze (3a), welche die Spitze (11a) des Elastomer-Körpers und die erste Armierung (12) abdeckt.

13. Verfahren gemäß einem der vorstehenden Ansprüche, in welchem der hydraulische Raum eine mit Flüssigkeit gefüllte Arbeitskammer (13) und eine mit Flüssigkeit gefüllte Ausgleichskammer (14) einschließt, die mittels einer Trennwand (15) von der Arbeitskammer (13) abgetrennt und zumindest teilweise von der Schließwand (16) begrenzt ist, wobei diese Schließwand biegsam ist.

14. Verfahren gemäß Anspruch 13, in welchem im Verlauf des Schritts (c) zumindest ein Schließbereich (17) eingefasst wird, welcher der zweiten Armierung (10) auf der biegsamen Wand (16) und der Trennwand (15) zugehört, und in welchem im Verlauf des Schritts (e) des Umgießens das Verbindungsstück (2) aus Kunststoff auf der zweiten Armierung (10) umgossen wird, wobei es den eingefassten Schließbereich (17) zumindest teilweise bedeckt.

15. Vibrationshemmende Vorrichtung (1), die dazu geeignet ist, mittels eines Verfahrens gemäß einer der vorstehenden Ansprüche hergestellt zu werden, die dazu bestimmt ist, zum Zwecke des Dämpfens und Verbindens zwischen ersten und zweiten Elementen angeordnet zu werden, wobei diese vibrationshemmende Vorrichtung (1) ein hydraulisches Element (4) einschließt, welches seinerseits einschließt:
- erste und zweite Armierungen (12, 10), die dazu ausgelegt sind, um an ersten bzw. zweiten Elementen befestigt zu werden,
- einen Elastomer-Körper (11), der die ersten und zweiten Armierungen (12, 10) miteinander verbindet,
- und einen mit Flüssigkeit gefüllten, dichten hydraulischen Raum, der vom Elastomer-Körper (11) und einer Schließwand (16) begrenzt ist, wobei die Schließwand (16) mittels zumindest eines Schließbereichs (17) mit der zweiten Armierung verbunden ist,
**dadurch gekennzeichnet, dass** sie ferner ein Verbindungsstück (2) aus Kunststoff umfasst, welches auf der zweiten Armierung (10, 12) umgossen ist und den Schließbereich (17) zumindest teilweise abdeckt.

16. Vibrationshemmende Vorrichtung (1) gemäß Anspruch 15, bei welcher Verbindungsstück (2) aus Kunststoff mit Befestigungsorganen (5) verbunden ist, die dazu ausgelegt sind, am zweiten Element befestigt zu werden, wobei die Befestigungsorgane (5) vom Verbindungsstück (2) aus Kunststoff umgossen sind.

17. Vorrichtung gemäß einem der Ansprüche 15 und 16, bei welcher der Elastomer-Körper (11) eine dünne Elastomer-Schicht einschließt, welche die zweite Armierung (10) zumindest teilweise ummantelt und zwischen der zweiten Armierung (10) und dem Verbindungsstück (2) angeordnet ist.

18. Vorrichtung gemäß einem der Ansprüche 15 bis 17, bei welcher das hydraulische Element eine Umfangsrille (7) aufweist, in welche das Verbindungsstück (2) eintritt.

19. Vibrationshemmende Vorrichtung gemäß einem der Ansprüche 15 bis 18, bei welcher das Verbindungsstück (2) aus Kunststoff mit einem federnden Begrenzungsorgan (3) verbunden ist, welches dazu ausgelegt ist, die relativen Federungswege zwischen den ersten und zweiten Armierungen (12, 10) zu begrenzen.

20. Vibrationshemmende Vorrichtung gemäß Anspruch 19, bei welcher das Begrenzungsorgan (3) mit dem Verbindungsstück (2) einstückig aus Kunststoff gegossen ist.

21. Vibrationshemmende Vorrichtung gemäß Anspruch 19 oder Anspruch 20, bei welcher das Einschränkungsorgan (3) eine Druckvorspannung auf den Elastomer-Körper (11) aufrechterhält.

22. Vibrationshemmende Vorrichtung gemäß einem der Ansprüche 19 bis 21, bei welcher der Elastomer-Körper (11) im Wesentlichen glockenförmig ist und sich entlang einer Mittelachse (Z) zwischen einer mit der ersten Armierung (12) verbundenen Spitze (11a) und einer mit der zweiten Armierung (10) verbundenen, ringförmigen Basis (11 b) erstreckt, wobei das Verbindungsstück aus Kunststoff auf der zweiten Armierung (10) umgossen ist und sich im Wesentlichen orthogonal zur Mittelachse erstreckt und das Begrenzungsorgan (3) einen Bogen bildet, umfassend:
zwei Enden (3b), die auf beiden Seiten des Elastomer-Körpers (11) mit dem Verbindungsstück aus Kunststoff verbunden sind,
und eine Spitze (3a), welche die Spitze (11a) des Elastomer-Körpers und die erste Armierung (12) abdeckt.

23. Vibrationshemmende Vorrichtung gemäß einem der Ansprüche 15 bis 22, bei welcher der hydraulische Raum einschließt:
- einerseits eine vom Elastomer-Körper (11) begrenzte Arbeitskammer (13),
- und andererseits eine mit Flüssigkeit gefüllte Ausgleichskammer (14), die mittels einer Trennwand (15) von der Arbeitskammer (13) abgetrennt und zumindest teilweise von der Schließwand (16) begrenzt ist, wobei diese Schließwand biegsam ist.

24. Vorrichtung gemäß Anspruch 23, bei welcher der Schließbereich (17) der zweiten Armierung (10) zugehört und der Schließbereich auf der biegsamen Wand (16) und der Trennwand (15) eingefasst ist.
